(19) **Europäisches Patentamt European Patent Office Office européen des brevets**

(11) **EP 4 773 192 A1**

(12) **EUROPEAN PATENT APPLICATION**
published in accordance with Art. 153(4) EPC

(43) Date of publication:
08.07.2026 Bulletin 2026/28

(21) Application number: 25864036.6

(22) Date of filing: 04.09.2025

(51) International Patent Classification (IPC):
$H01M\ 4/04^{(2006.01)}$ $H01M\ 4/1393^{(2010.01)}$
$H01M\ 4/38^{(2006.01)}$ $H01M\ 4/583^{(2010.01)}$
$H01M\ 4/133^{(2010.01)}$ $H01M\ 10/052^{(2010.01)}$

(52) Cooperative Patent Classification (CPC):
H01M 4/04; H01M 4/133; H01M 4/1393;
H01M 4/38; H01M 4/583; H01M 10/052;
Y02E 60/10

(86) International application number:
PCT/KR2025/013674

(87) International publication number:
WO 2026/054534 (12.03.2026 Gazette 2026/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.09.2024 KR 20240120032
03.09.2025 KR 20250124502

(71) Applicant: LG Energy Solution, Ltd.
Seoul 07335 (KR)

(72) Inventors:
• HONG, Doyoung
  Daejeon 34122 (KR)
• LEE, Ilha
  Daejeon 34122 (KR)
• JOO, Mun Kyu
  Daejeon 34122 (KR)
• KWON, Yohan
  Daejeon 34122 (KR)

(74) Representative: Hoffmann Eitle
Patent- und Rechtsanwälte PartmbB
Arabellastraße 30
81925 München (DE)

(54) **METHOD FOR MANUFACTURING LITHIUM SECONDARY BATTERY ELECTRODE, LITHIUM SECONDARY BATTERY ELECTRODE MANUFACTURED USING SAME, AND LITHIUM SECONDARY BATTERY COMPRISING SAME**

(57) An exemplary embodiment of the present invention relates to a method for manufacturing an electrode for a lithium secondary battery, the method including: bringing a transfer stack, in which a base layer and a lithium metal layer are in direct contact with each other, into contact with one surface of an electrode active material layer such that the electrode active material layer and the lithium metal layer face each other; and pressing the electrode active material layer in contact with the transfer stack under a pressure of 6 kgf/cm$^2$ or less and aging the electrode active material layer, wherein the transfer stack is formed by bringing the lithium metal layer into contact with one surface of the base layer and press-rolling the lithium metal layer, an electrode for a lithium secondary battery manufactured thereby, and a lithium secondary battery including the electrode.

[Figure 1]

**Description**

[Technical Field]

The present invention relates to a method for manufacturing an electrode for a lithium secondary battery, an electrode for a lithium secondary battery manufactured thereby, and a lithium secondary battery including the electrode.

This application claims priority to and the benefit of Korean Patent Application No. 10-2024-0120032 filed in the Korean Intellectual Property Office on September 4, 2024 and Korean Patent Application No. 10-2025-0124502 filed in the Korean Intellectual Property Office on September 3, 2025, the entire contents of which are incorporated herein by reference.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

Note that lithium secondary batteries undergo lithium loss from the first charge after a battery is manufactured. During subsequent charge/discharge cycles and high-temperature storage periods, lithium loss continues to occur, albeit in very small amounts, leading to battery degradation. To compensate for this lithium loss, a pre-lithiation process is applied to additionally intercalate lithium into the battery before operating the battery. However, residual lithium remaining without being completely used in the pre-lithiation process adversely affects the performance of the battery.

[Citation List]

[Patent Literature]

(Patent Literature 1) Japanese Patent Application Publication No. 2009-080971

[Detailed Description of the Invention]

[Technical Problem]

The present invention is intended to provide a method for manufacturing an electrode for a lithium secondary battery for preventing generation of residual lithium, an electrode for a lithium secondary battery manufactured thereby, and a lithium secondary battery including the electrode.

[Technical Solution]

An exemplary embodiment of the present specification provides a method for manufacturing an electrode for a lithium secondary battery, the method including: bringing a transfer stack, in which a base layer and a lithium metal layer are in direct contact with each other, into contact with one surface of an electrode active material layer such that the electrode active material layer and the lithium metal layer face each other; and pressing the electrode active material layer in contact with the transfer stack under a pressure of 6 kgf/cm$^2$ or less and aging the electrode active material layer, wherein the transfer stack is formed by bringing the lithium metal layer into contact with one surface of the base layer and press-rolling the lithium metal layer.

An exemplary embodiment of the present specification provides an electrode for a lithium secondary battery manufactured by the above-described manufacturing method, the electrode including: an electrode current collector layer; and an electrode active material layer provided on at least one surface of the electrode current collector layer.

An exemplary embodiment of the present specification provides a lithium secondary battery including the above-described electrode for a lithium secondary battery; a separator; and an electrolyte solution.

Another exemplary embodiment of the present specification provides a battery module including the lithium secondary battery described above.

Still another exemplary embodiment of the present specification provides a battery pack including the lithium secondary battery described above.

Further, an exemplary embodiment of the present specification provides a battery pack including the battery module described above.

[Advantageous Effects]

The method for manufacturing an electrode for a lithium secondary battery according to an exemplary embodiment described herein can provide an electrode for a lithium secondary battery exhibiting an excellent pre-lithiation dose and charge/discharge efficiency by suppressing generation of residual lithium that remains on the electrode surface without being consumed in pre-lithiation, and capable of enabling improvements in life performance and voltage stability by suppressing lithium plating, and a lithium secondary battery including the same.

[Brief Description of Drawings]

FIG. 1 is a flowchart showing a method for manufacturing an electrode for a lithium secondary battery according to an exemplary embodiment of the present specification.

FIG. 2 is a view showing a laminated structure of a lithium secondary battery according to an exemplary embodiment of the present specification.

FIG. 3 is a diagram showing electrode surfaces immediately after pressing and after completion of pre-lithiation in the Example and Comparative Examples of the present specification.

FIG. 4 is a diagram showing evaluation results for charge/discharge efficiency of half-cells of the Example and Comparative Examples of the present specification.

FIG. 5 is a diagram showing evaluation results for life and voltage drop of the half-cells of the Example and Comparative Examples of the present specification.

[Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In the present specification, when one member is referred to as being provided on "both surfaces" of another member, this means that one member is provided on one surface of another member, and one member is also provided on another surface corresponding to the one surface. In addition, this includes not only a case where one member is in direct contact with another member, but also a case where still another member is present between the two members.

In the present specification, 'p to q' means a range of 'p or more and q or less'.

In the present specification, the terms such as "~unit" and "device" refer to units for processing at least one function or operation.

In the present specification, "Dn" refers to a particle size distribution, and refers to a particle diameter (average particle diameter) at the n% point in the cumulative distribution of the number of particles according to the particle diameter. That is, $D_{50}$ is the particle diameter at the 50% point of the cumulative distribution of the number of particles according to the particle diameter, $D_{90}$ is the particle diameter at the 90% point of the cumulative distribution of the number of particles according to the particle diameter, and $D_{10}$ is the particle diameter at the 10% point of the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present specification, the particle size or particle diameter may refer to the average diameter or representative diameter of each grain forming metal powder.

As used herein, the singular forms of terms, such as "a", "an" and "the", are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

**Manufacturing method**

An exemplary embodiment of the present specification provides a method for manufacturing an electrode for a lithium secondary battery, the method including: bringing a transfer stack, in which a base layer and a lithium metal layer are in direct contact with each other, into contact with one surface of an electrode active material layer such that the electrode active material layer and the lithium metal layer face each other; and pressing the electrode active material layer in contact with the transfer stack under a pressure of 6 kgf/cm$^2$ or less and aging the electrode active material layer, wherein the transfer stack is formed by bringing the lithium metal layer into contact with one surface of the base layer and press-rolling the lithium metal layer.

The present invention is to pre-lithiate an electrode active material layer by direct contact with a transfer stack, which is formed by press-rolling a lithium metal layer on a base layer. In the transfer stack formed by press-rolling, the base layer and the lithium metal layer are in direct contact with each other, and the base layer can be more easily removed from the lithium metal layer compared to a transfer stack formed by deposition, so that there is no need to provide a separate release layer between the base layer and the lithium metal layer. Since there is no release layer between the base layer and the lithium metal layer, the interference with heat dissipation caused by the release layer can be prevented. However, since the lithium metal layer has large surface roughness and the lithium metal grains are transferred while separating from one another during transfer onto the electrode active material layer, regions occur in which the electrode active material layer and the lithium metal layer do not properly contact each other. In the regions in which the lithium metal layer does not make proper contact, lithium unconsumed in the pre-lithiation reaction remains on the surface of the electrode. Such residual lithium is not easily decomposed during operation, which may reduce the pre-lithiation capacity and charge/discharge efficiency, or may act as a seed to form dendrites on the electrode surface. In this case, the life may rapidly deteriorate and a sudden voltage drop may occur due to an internal short.

Therefore, the present invention is characterized in that, by performing an aging step without peeling off the base layer and carrying out pre-lithiation, the lithium metal layer and the electrode active material layer are brought into uniform contact, suppressing residual lithium on the electrode surface to secure excellent pre-lithiation dose and charge/discharge efficiency, and suppressing lithium plating to improve life performance and voltage stability. In addition, when pressing is performed at high pressure during the transfer, the pre-lithiation reaction is promoted during the aging step, so that a large amount of heat is generated. The generated heat is not properly dissipated by the base layer, which may form a thick byproduct layer at the central portion of the electrode surface. Therefore, the present invention is characterized in that pressing is performed at a proper pressure of 6 kgf/cm$^2$ or less during transfer to suppress the formation of a by-product layer on the electrode surface.

The method for manufacturing an electrode for a lithium secondary battery according to an exemplary embodiment of the present specification includes a step of bringing the transfer stack, in which the base layer and the lithium metal layer are in direct contact with each other, into contact with one surface of an electrode active material layer such that the electrode active material layer and the lithium metal layer face each other.

The method for manufacturing an electrode for a lithium secondary battery according to an exemplary embodiment of the present specification can compensate for irreversible capacity by applying pre-lithiation to prevent lithium loss, thereby improving battery capacity or cycle performance. In this case, the pre-lithiation method includes pre-lithiation by electrochemical method, pre-lithiation using SLMP, pre-lithiation by direct contact method, or the like. An exemplary embodiment of the present invention performs pre-lithiation by direct contact method, particularly by transfer method based on direct contact of lithium metal layer, and can minimize residual lithium on the electrode surface. Furthermore, since it can be applied to a roll-to-roll process useful for mass production of electrodes compared with other methods, it provides the advantage of achieving faster process speed and being effective for mass production.

In an exemplary embodiment of the present specification, the step of bringing the transfer stack into contact with one surface of the electrode active material layer such that the electrode active material layer and the lithium metal layer face each other is to laminate the transfer stack on one surface of the electrode active material layer such that the lithium metal layer faces the electrode active material layer, which is a step for transferring lithium metal to the electrode active material layer.

For a transfer method by direct contact with the lithium metal layer, a transfer stack including a lithium metal layer for pre-lithiating an electrode active material layer and a base layer supporting the lithium metal layer is required. Since the transfer stack is formed by contacting and press-rolling the base layer and the lithium metal layer, the base layer and the lithium metal layer may be in direct contact with each other.

The transfer stack according to an exemplary embodiment of the present specification includes the base layer and the lithium metal layer in direct contact with each other without a separate release layer therebetween, and thus has the advantages that heat dissipation is not hindered by a release layer, and thus the formation of by-products on the surface of the pre-lithiated electrode is not accelerated.

In an exemplary embodiment of the present specification, the transfer stack includes a lithium metal layer. In this case, the lithium metal layer is a layer including lithium metal for pre-lithiating one surface of the electrode active material layer, and a commonly used Li metal foil may be used, but the present invention is not limited thereto.

In an exemplary embodiment of the present specification, a thickness of the lithium metal layer may be 0.1 $\mu$m or more and 30 $\mu$m or less, specifically 1 $\mu$m or more and 25 $\mu$m or less, and more specifically 1 $\mu$m or more and 20 $\mu$m or less. In this case, the thickness of the lithium metal layer refers to a thickness of a lithium metal layer before forming a transfer stack by press-rolling the lithium metal layer on one surface of the base layer.

When the thickness of the lithium metal layer falls within the specific range, the irreversible capacity during charging and discharging of the lithium secondary battery can be sufficiently compensated.

In an exemplary embodiment of the present specification, the base layer can be used without limitation as long as it has the characteristics of being able to withstand process conditions such as high pressure during the step of press-rolling the lithium metal layer and to prevent the problem of reverse peeling, in which the lithium metal layer is transferred onto the base layer during a winding process for transferring the press-rolled lithium metal layer.

In an exemplary embodiment of the present specification, the base layer may be one or more selected from the group consisting of polyethylene terephthalate (PET), polyimide (PI), poly(methylmethacrylate) (PMMA), polypropylene, polyethylene, and polycarbonate, specifically, one or more selected from the group consisting of polyethylene terephthalate (PET), polyimide (PI), and poly(methylmethacrylate) (PMMA), and more specifically, polyethylene terephthalate (PET).

In an exemplary embodiment of the present specification, a thickness of the base layer may fall within a range of 1 $\mu$m or more and 300 $\mu$m or less, specifically 5 $\mu$m or more and 200 $\mu$m or less, and more specifically 10 $\mu$m or more and 100 $\mu$m or less.

When the thickness of the base layer falls within the specific range, the transfer of the lithium metal to the electrode active material layer can occur efficiently and the reverse transfer can be prevented.

The transfer stack according to an exemplary embodiment of the present specification may be formed by contacting and press-rolling the lithium metal layer on one surface of the base layer.

The transfer stack according to an exemplary embodiment of the present invention is formed by press-rolling the lithium metal layer on the base layer, so that the base layer can be easily peeled off, and since a separate release layer does not need to be provided between the base layer and the lithium metal layer, heat dissipation is not hindered by the release layer, so that there is an advantage in that the formation of by-products on the surface of the pre-lithiated electrode is not accelerated.

In the case of a transfer stack formed by depositing a lithium metal layer on a base layer, the peeling strength of the base layer increases due to the heat generated during deposition, and the peeling strength of the base layer further increases as the thickness of the deposited lithium metal layer increases. This makes it difficult to peel off the base layer during pre-lithiation, and rather, when the base layer is peeled off, the lithium metal layer or electrode active material layer may be detached. Therefore, to prevent this, a separate release layer is provided between the base layer and the lithium metal layer. For example, when a 5$\mu$m lithium metal layer is deposited on a base layer, even if a PMMA (poly(methylmethacrylate) release layer of about 500 nm is provided between the base layer and the lithium metal layer, the peeling strength of the base layer is significantly high at 53.76 gf/20 mm (measured at a peeling angle of 90° and a peeling speed of 30 cm/min), and the peeling strength further increases as the thickness of the lithium metal layer increases. However, when a 5$\mu$m lithium metal layer is press-rolled on the base layer, the peeling strength of the base layer during pre-lithiation is only 9.38 gf/20 mm (measured at a peeling angle of 90° and a peeling speed of 30 cm/min), so the base layer can be easily removed without a separate release layer. That is, the transfer stack of the present invention is characterized in that the base layer can be easily removed even without a release layer. In addition, the release layer may hinder the dissipation of heat generated during the pre-lithiation reaction, thereby accelerating the formation of by-products on the electrode surface. However, since the transfer stack of the present invention is free of a release layer, such a problem can be prevented.

The method for manufacturing an electrode for a lithium secondary battery according to an exemplary embodiment of the present specification may further include a step of forming the transfer stack by bringing the lithium metal layer into contact with one surface of the base layer and press-rolling the lithium metal layer, and the steps of bringing the lithium metal layer into contact with one surface of the base layer and press-rolling the lithium metal layer may be performed sequentially or simultaneously, and there is no limitation thereto.

Specifically, the transfer stack according to an exemplary embodiment of the present specification may be manufactured by bringing the lithium metal layer into contact with one surface of the base layer and then press-rolling the lithium metal layer at room temperature using a roll-to-roll method, and more specifically, press-rolling the lithium metal layer multiple times until the thickness of the lithium metal layer reaches a target thickness. In this case, the target thickness of the lithium metal layer may be 0.1 $\mu$m or more and 15 $\mu$m or less. Additionally, the contact and press-rolling may be performed simultaneously or sequentially.

That is, in an exemplary embodiment of the present specification, the thickness of the lithium metal layer after contact with one surface of the base layer and press-rolling may be 0.1 $\mu$m or more and 15 $\mu$m or less, specifically 1 $\mu$m or more and 10 $\mu$m or less, and more specifically 1 $\mu$m or more and 6 $\mu$m or less. When the thickness of the lithium metal layer after contact with one surface of the base layer and press-rolling falls within the specific range, the irreversible capacity during charging and discharging of the lithium secondary battery can be sufficiently compensated.

In addition, when forming the transfer stack according to an exemplary embodiment of the present specification, the pressure applied during press-rolling by the roll-to-roll method may be 80 kgf/cm$^2$ or more.

That is, in an exemplary embodiment of the present specification, the transfer stack may be formed by bringing the lithium metal layer into contact with one surface of the base layer and press-rolling the lithium metal layer under a pressure of 80 kgf/cm$^2$ or more, specifically 90 kgf/cm$^2$ or more, and more specifically 100 kgf/cm$^2$ or more.

Additionally, in an exemplary embodiment of the present specification, the transfer stack may be formed by bringing the lithium metal layer into contact with one surface of the base layer and press-rolling the lithium metal layer under a pressure of 300 kgf/cm$^2$ or less, specifically 280 kgf/cm$^2$ or less, and more specifically 250 kgf/cm$^2$ or less.

However, the transfer stack formed by press-rolling the lithium metal layer on one surface of the base layer undergoes grain separation of the lithium metal layer during transfer onto the electrode active material layer, making clean transfer difficult, increasing the surface roughness of the lithium metal layer portion of the transfer stack, and resulting in regions where the lithium metal layer does not make proper contact with an electrode active material. The portion of the lithium metal layer that does not make proper contact with the electrode is not fully pre-lithiated to the inside of the electrode and remains on the electrode surface. To prevent this, if high pressure is applied during pressing after the transfer layer is brought into contact with the electrode active material layer, the pre-lithiation reaction may become excessively active, resulting in increased heat generation, formation of a by-product layer, and damage to the electrode surface active material layer.

Therefore, the present invention is intended to suppress the formation of residual lithium remaining on the electrode surface and to enable a clean pre-lithiation reaction without formation of a by-product layer or damage to the active material layer, by applying an appropriately low pressure during pressing after the transfer stack is brought into contact with the electrode active material layer.

In an exemplary embodiment of the present specification, the steps of bringing the transfer stack into contact with one surface of the electrode active material layer and pressing the electrode active material layer in contact with the transfer stack may be performed sequentially or simultaneously, and there is no limitation thereto.

As an example, when the steps of bringing the transfer stack into contact with one surface of the electrode active material layer and pressing the electrode active material layer in contact with the transfer stack are performed sequentially, the pre-lithiation reaction may begin from the moment one point of the transfer stack is brought into contact with one point of one surface of the electrode active material layer, or the pre-lithiation reaction may begin from the moment one point of the electrode active material layer in contact with the transfer stack is pressed, and the contacting step and the pressing step may have a time difference of several seconds to several minutes.

For example, when the steps of bringing the transfer stack into contact with one surface of the electrode active material layer and pressing the electrode active material layer in contact with the transfer stack are performed simultaneously, one point of the electrode active material layer in contact with the transfer stack may be pressed at the same time as one point of the transfer stack is brought into contact with one point of one surface of the electrode active material layer, and in this case, the pre-lithiation reaction may begin from the moment the contacting and pressing begin, or may begin after several seconds to several minutes.

The method for manufacturing an electrode for a lithium secondary battery according to an exemplary embodiment of the present specification includes the steps of pressing the electrode active material layer in contact with the transfer stack under a pressure of 6 kgf/cm$^2$ or less and aging the electrode active material layer.

The method for manufacturing an electrode for a lithium secondary battery according to an exemplary embodiment of the present specification has the effects of enabling more active pre-lithiation in the electrode active material layer as a result of transfer through the pressing step, and enabling the electrode to be formed thin despite high energy density.

In an exemplary embodiment of the present specification, the pressure in the pressing step may be 6 kgf/cm$^2$ or less, specifically 4.5 kgf/cm$^2$ or less, and more specifically 4.2 kgf/cm$^2$ or less.

In addition, in an exemplary embodiment of the present specification, the pressure in the pressing step may be 1 kgf/cm$^2$ or more, specifically 1.5 kgf/cm$^2$ or more, and more specifically 2 kgf/cm$^2$ or more.

In an exemplary embodiment of the present specification, when the pressure in the pressing step falls within the specific range, the electrode active material layer and the lithium metal layer can be brought into uniform contact, thereby suppressing the formation of residual lithium on the surface of the electrode after completion of the pre-lithiation, and enabling clean pre-lithiation without damage to the electrode active material layer or the formation of a by-product layer.

The method for manufacturing an electrode for a lithium secondary battery according to an exemplary embodiment of the present specification includes the step of aging the electrode active material layer in contact with the transfer stack. The aging step is a step of maintaining a state while one surface of the electrode active material layer reacts with the lithium metal layer to undergo pre-lithiation.

In an exemplary embodiment of the present specification, the aging step may be performed before the step of pressing the electrode active material layer in contact with the transfer stack, may be performed simultaneously with the pressing step, or may be performed after the pressing step, and there is no limitation thereto.

As an example, the aging may begin several seconds to several minutes before pressing is performed at one point of the electrode active material layer in contact with the transfer stack. In this case, the aging step may begin simultaneously with the contacting step of the transfer layer, or may begin within several seconds to several minutes from the contacting step. In this case, the pre-lithiation reaction may proceed before the pressing step, and the pressing step may be a step for promoting the pre-lithiation reaction.

As an example, the aging may begin simultaneously with the start of pressing at one point of the electrode active material layer in contact with the transfer stack. In this case, the contacting step of the transfer stack, the pressing step, and the aging step may all begin simultaneously, or the pressing step and the aging step may begin within several seconds to several minutes from the contacting step.

As an example, the aging may begin from the moment the pressing is completed at one last point of the electrode active material layer in contact with the transfer stack.

In an exemplary embodiment of the present specification, the aging step may be performed at a temperature ranging from 0°C to 40°C, specifically 10°C to 30°C, and more specifically 20°C to 28°C.

In an exemplary embodiment of the present specification, the aging step may be performed at room temperature.

In the method for manufacturing an electrode for a lithium secondary battery according to an exemplary embodiment of the present specification, the pre-lithiation reaction rate can be controlled within an appropriate range by controlling the temperature range of the aging step to be within the specific range.

In an exemplary embodiment of the present specification, in the aging step, the transfer stack may be in a state including the base layer until the pre-lithiation of one surface of the electrode active material layer is completed. In this case, whether the pre-lithiation has been completed can be determined by visually observing a change in color of the electrode surface. Specifically, it can be confirmed whether the pre-lithiation has been completed by observing that the surface of the electrode, which is silver like lithium metal immediately after lithium transfer, has completely changed to the inherent color of the electrode (black) after completion of the pre-lithiation. In this case, since the base layer is transparent, the silver color of the lithium metal or the inherent color of the electrode can be confirmed regardless of whether the base layer is peeled off.

The present invention can promote a chemical reaction between the electrode active material layer and the lithium metal layer by performing all of the step of bringing the transfer stack into contact with the electrode active material layer, and the pressing step, and the aging without removing the base layer, thereby suppressing the formation of residual lithium on the electrode surface. However, if the pressing is performed at a high pressure, the pre-lithiation reaction is promoted, which may cause a thick byproduct layer to form on the electrode surface after the aging. Therefore, the present invention can suppress the formation of residual lithium and the byproduct layer on the electrode surface by performing the pressing at an appropriate pressure that falls within the specific range according to an exemplary embodiment of the present specification.

The method for manufacturing an electrode for a lithium secondary battery according to an exemplary embodiment of the present specification may further include a step of removing the base layer from the transfer stack after the aging step.

In an exemplary embodiment of the present specification, the step of removing the base layer may be performed after the pre-lithiation is completed.

In an exemplary embodiment of the present specification, the pre-lithiation may be a process in which a pre-lithiation reaction begins between the electrode active material layer and the lithium metal layer from a point in time at which the lithium metal layer comes into contact with one surface of the electrode active material layer, within several seconds to several minutes after the contact of the lithium metal layer, or from a point in time at which the base layer is removed.

In an exemplary embodiment of the present specification, the pre-lithiation reaction may be completed within several days, within 24 hours, or within several seconds to several minutes from the point in time at which the lithium metal layer comes into contact with one surface of the electrode active material layer.

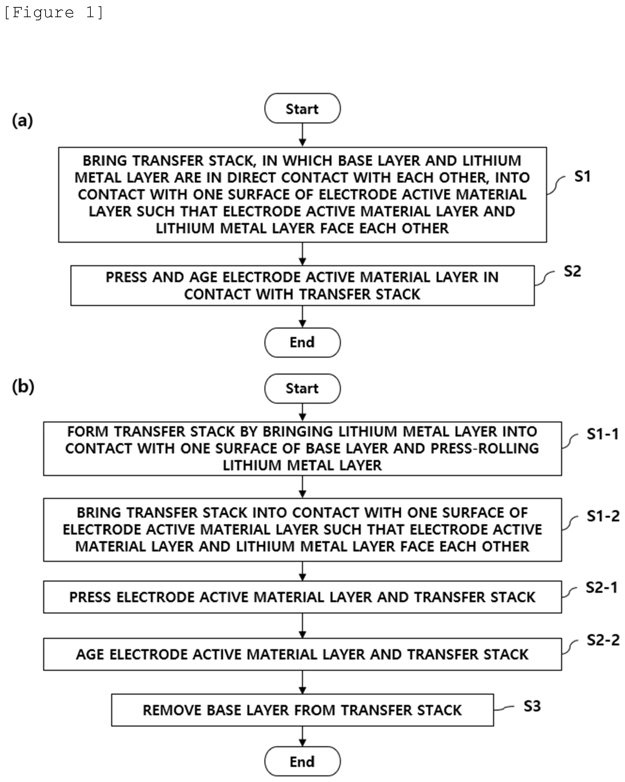

FIG. 1 is a flowchart showing a method for manufacturing an electrode for a lithium secondary battery according to an exemplary embodiment of the present specification.

Specifically, FIG. 1(a) shows a method for manufacturing an electrode for a lithium secondary battery including a step (S1) of bringing a transfer stack, in which a base layer and a lithium metal layer are in direct contact with each other, into contact with one surface of an electrode active material layer such that the electrode active material layer and the lithium metal layer face each other; and a step (S2) of pressing the electrode active material layer in contact with the transfer stack under a pressure of 6 kgf/cm$^2$ or less and aging the electrode active material layer. Although not shown in FIG. 1(a), the transfer stack may be formed by bringing the lithium metal layer into contact with one surface of the base layer and press-rolling the lithium metal layer. In an exemplary embodiment of the present specification according to FIG. 1(a), a step (not shown) of preparing an electrode active material layer on at least one surface of an electrode current collector layer may be performed before the step (S1) of FIG. 1(a).

FIG. 1(b) shows a method for manufacturing an electrode for a lithium secondary battery, including a step (S1-1) of forming a transfer stack by bringing a lithium metal layer into contact with one surface of a base layer and press-rolling the lithium metal layer; a step (S1-2) of bringing a transfer stack into contact with one surface of an electrode active material layer such that the electrode active material layer and the lithium metal layer face each other; a step (S2-1) of pressing the electrode active material layer and the transfer stack together; a step (S2-2) of aging the electrode active material layer and the transfer stack together; and a step (S3) of removing the base layer from the transfer stack.

In this case, steps S2-1 and S2-2 of FIG. 1(b) may be performed simultaneously or each step may be performed sequentially, but there is no limitation thereto.

In an exemplary embodiment of the present specification according to FIG. 1(b), a step (not shown) of preparing an electrode active material layer on at least one surface of an electrode current collector layer may be performed before step S1-1, may be performed simultaneously with step S1-1, or may be performed between steps S1-1 and S1-2, and there is no limitation thereto.

In addition, in step S1 or S1-2 of FIG. 1(a) and FIG. 1(b), the electrode active material layer may be provided on one surface or both surfaces of the electrode current collector layer, and there is no limitation thereto.

## Electrode Active Material Layer

The method of manufacturing an electrode for a lithium secondary battery according to an exemplary embodiment of the present specification may further include a step of providing an electrode active material layer on at least one surface of an electrode current collector layer before the step of bringing the transfer stack into contact with one surface of the electrode active material layer.

In the present specification, the 'electrode' may be a negative electrode or a positive electrode, and specifically, may be a negative electrode.

That is, in an exemplary embodiment of the present specification, the step of providing an electrode active material layer on at least one surface of the electrode current collector layer may be a step of providing a negative electrode active material layer on at least one surface of a negative electrode current collector layer, or may be a step of providing a positive electrode active material layer on at least one surface of a positive electrode current collector layer.

Below, the step of providing a negative electrode active material layer will be first described. However, the same method can also be applied to the step of providing a positive electrode active material layer.

The step of providing a negative electrode active material layer on at least one surface of the negative electrode current collector layer according to an exemplary embodiment of the present specification includes a step of preparing a negative electrode slurry; and a step of applying and drying the negative electrode slurry on at least one surface of the negative electrode current collector layer.

In an exemplary embodiment of the present specification, the negative electrode slurry may include a negative electrode active material layer composition and a slurry solvent.

In an exemplary embodiment of the present specification, the solid content of the negative electrode slurry may fall within a range of 1% or more and 40% or less, specifically 5% or more and 35% or less, and more specifically 7% or more and 30% or less.

In the present specification, the solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the specified range, an appropriate viscosity is secured when forming a negative electrode active material layer, thereby minimizing particle agglomeration of the negative electrode active material layer composition and enabling efficient formation of the negative electrode active material layer.

In an exemplary embodiment of the present specification, the slurry solvent is not limited thereto as long as it can dissolve the negative electrode active material layer composition. For example, the slurry solvent may be water (e.g., distilled water) or NMP.

According to an exemplary embodiment of the present specification, a negative electrode may be formed by applying and drying the negative electrode slurry on a negative electrode current collector layer, and through the drying step, the slurry solvent in the negative electrode slurry can be dried.

In an exemplary embodiment of the present specification, the negative electrode active material layer composition may include one or more selected from the group consisting of a negative electrode active material described below; a negative electrode binder; and a conductive dispersion, and specifically, the negative electrode active material may include a carbon-based active material and a silicon-based active material.

In other words, the negative electrode active material layer according to an exemplary embodiment of the present specification may include a carbon-based active material and a silicon-based active material as the negative electrode active material, and the silicon-based active material may include one or more selected from the group consisting of Si, silicon oxide, Si/C, and a Si alloy.

Specifically, in an exemplary embodiment of the present specification, the silicon-based active material may include one or more selected from the group consisting of Si and silicon oxide, and more specifically, the silicon-based active material may include Si.

In an exemplary embodiment of the present specification, the carbon-based active material may include one or more selected from the group consisting of graphite such as natural graphite or artificial graphite, carbon fiber, non-graphitizable carbon, carbon black, carbon nanotubes, fullerene, and activated carbon, and specifically, may include one or more selected from the group consisting of natural graphite and artificial graphite.

When the above carbon-based active material is used as a negative electrode active material according to an exemplary embodiment of the present specification, reversible intercalation and deintercalation of lithium ions are possible, and structural and electrical properties can be maintained. Among these, graphite-based active materials can ensure the life characteristics of lithium secondary batteries due to their excellent reversibility. Since the graphite-based active material has a low discharge voltage of -0.2 V with respect to lithium, a battery using the graphite-based active material can exhibit a high discharge voltage of 3.6 V, and thus can provide many advantages in terms of energy density of a lithium secondary battery.

In an exemplary embodiment of the present specification, when artificial graphite is used as the carbon-based active material, the orientation degree is relatively low during electrode press-rolling, enabling favorable lithium ion intercalation/deintercalation characteristics. Therefore, the rapid charging performance of the battery is excellent, and the degree of expansion due to charging and discharging is low, enabling excellent lifetime characteristics.

In an exemplary embodiment of the present specification, an average particle diameter ($D_{50}$) of the artificial graphite may be 5 $\mu$m or more and 20 $\mu$m or less, preferably 8 $\mu$m or more and 18 $\mu$m or less, and more preferably 10 $\mu$m or more and 16 $\mu$m or less.

In an exemplary embodiment of the present specification, when natural graphite is used as the carbon-based active material, the output and capacity of the lithium secondary battery are improved, and the excellent adhesion allows a reduced amount of binder used or the like, thereby enabling the realization of a high-capacity, high-density negative electrode. In this case, the natural graphite may be generally in the form of plate-like agglomerates before being processed, and the plate-like particles may be manufactured in the form of a sphere having a smooth surface through post-treatment processing such as particle pulverization and re-assembly process for use as an active material for manufacture of an electrode.

In an exemplary embodiment of the present specification, an average particle diameter ($D_{50}$) of the natural graphite may be 5 $\mu$m or more and 20 $\mu$m or less, preferably 7 $\mu$m or more and 18 $\mu$m or less, and more preferably 9 $\mu$m or more and 15 $\mu$m or less.

In an exemplary embodiment of the present specification, the negative electrode active material layer may include a carbon-based active material and a silicon-based active material as the negative electrode active material, the carbon-based active material may include one or more selected from the group consisting of natural graphite and artificial graphite, and the silicon-based active material may include Si.

In an exemplary embodiment of the present specification, the negative electrode active material may include the carbon-based active material and the silicon-based active material in a weight ratio of 95:5 to 40:60, specifically 90:10 to 50:50, and more specifically ratio of 85:15 to 60:40.

In an exemplary embodiment of the present specification, the negative electrode active material may be included in an amount of 60 parts by weight or more and 99 parts by weight or less, specifically, 70 parts by weight or more and 98 parts by weight or less, and more specifically, 80 parts by weight or more and 97 parts by weight or less, based on 100 parts by weight of the negative electrode active material layer.

In an exemplary embodiment of the present specification, the conductive dispersion may include a negative electrode conductive material and a dispersant.

In an exemplary embodiment of the present specification, the negative electrode conductive material is a material that is used to improve electron transport properties between active materials or between an active material and a current collector, and is not particularly limited as long as it has conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber or a metal fiber; a conductive tube such as a carbon nanotube; metal powder such as fluorocarbon, aluminum, and nickel powders; a conductive whisker such as zinc oxide and potassium titanate; a conductive metal oxide such as titanium oxide; or a conductive material such as a polyphenylene derivative may be used.

In an exemplary embodiment of the present specification, the negative electrode conductive material may include one or more selected from the group consisting of graphite, carbon black, graphene, and carbon nanotube (CNT), and specifically may include carbon nanotube (CNT).

In an exemplary embodiment of the present specification, the 'carbon nanotube' is a secondary structure formed by assembling carbon nanotube units in a bundle shape in whole or in part, and the carbon nanotube units have a graphite sheet having a cylindrical shape with a nano-sized diameter, and an $sp^2$-bonded structure. In this case, the characteristics of a conductive material or a semiconductive material may be exhibited depending on the rolled angle and structure of the graphite sheet. The carbon nanotube units may be classified into single-walled carbon nanotube (SWCNT), double-walled carbon nanotube (DWCNT), and multi-walled carbon nanotube (MWCNT) depending on the number of bonds that make up its wall, and the thinner the wall, the lower the resistance.

In an exemplary embodiment of the present specification, the negative electrode conductive material may further include graphite, carbon black, graphene, and the like, and any conductive material that does not cause a chemical change in the battery may be used without limitation.

In an exemplary embodiment of the present specification, the dispersant is for improving the dispersibility of the negative electrode conductive material and ensuring stability after dispersion, and may be, for example, a cellulose-based polymer, one or more selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

In an exemplary embodiment of the present specification, the content of the conductive dispersion in the negative electrode active material layer may be 0.01 parts by weight to 30 parts by weight, specifically 0.01 parts by weight to 10 parts by weight, based on 100 parts by weight of the negative electrode active material layer composition.

In an exemplary embodiment of the present specification, the negative electrode binder may serve to improve adhesion between negative electrode active material particles and adhesive strength between the negative electrode active material particles and the negative electrode current collector. The negative electrode binder may be one known in the art, and non-limiting examples thereof include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluoro rubber, polyacrylic acid, and a material in which hydrogen of these is substituted with Li, Na, Ca, or the like, and may also include various copolymers thereof.

In particular, the negative electrode binder according to an exemplary embodiment of the present specification serves to support the negative electrode active material and the negative electrode conductive material in order to prevent distortion and structural deformation of the negative electrode structure during the volume expansion and relaxation of the silicon-based active material. All general negative electrode binders satisfying the above-described role can be applied, specifically, a styrene-butadiene rubber (SBR) binder and carboxymethyl cellulose (CMC) may be used.

In an exemplary embodiment of the present specification, the content of the negative electrode binder may be 30 parts by weight or less, specifically 25 parts by weight or less, and more specifically 20 parts by weight or less, and 1 part by weight or more, and specifically 3 parts by weight or more, based on 100 parts by weight of the negative electrode active material layer composition.

In an exemplary embodiment of the present specification, the negative electrode current collector layer may generally have a thickness of 1 μm to 100 μm, specifically 3 μm to 50 μm, and more specifically 5 μm to 40 μm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present specification, the step of providing an electrode active material layer on at least one surface of the electrode current collector layer may be a step of providing a positive electrode active material layer on at least one surface of a positive electrode current collector layer.

In an exemplary embodiment of the present specification, the step of providing a positive electrode active material layer on at least one surface of a positive electrode current collector layer may include the steps of preparing a positive electrode slurry including a positive electrode active material; and applying the positive electrode slurry to at least one surface of the positive electrode current collector layer and drying it.

In an exemplary embodiment of the present specification, the positive electrode active material layer may include, as the positive electrode active material, a lithium composite transition metal compound including nickel (Ni) and cobalt (Co), and further including one or more elements selected from the group consisting of Na, K, Mg, Ca, Sr, Ni, Co, Ti, Al, Si, Sn, Mn, Cr, Fe, V, and Zr.

In an exemplary embodiment of the present specification, the positive electrode active material layer may include a lithium composite transition metal compound including nickel (Ni), cobalt (Co), and manganese (Mn), as the positive electrode active material.

In an exemplary embodiment of the present specification, the positive electrode slurry may include a positive electrode conductive material and a positive electrode binder, and may further include a thickener and a slurry solvent.

In an exemplary embodiment of the present specification, additional components such as the positive electrode current collector layer, positive electrode conductive material, positive electrode binder, thickener, and slurry solvent, and the method for manufacturing the positive electrode may be used without limitation as long as they are known in the art within the scope to which the above-described description applies.

## Electrode for Lithium Secondary Battery and Lithium Secondary Battery.

An electrode for a lithium secondary battery according to an exemplary embodiment of the present specification includes an electrode current collector layer; and an electrode active material layer provided on at least one surface of the electrode current collector layer, and may be manufactured by the manufacturing method described above.

An electrode for a lithium secondary battery according to an exemplary embodiment of the present specification may have increased pre-lithiation capacity and charge/discharge efficiency by suppressing generation of residual lithium that is not easily decomposed during operation.

Specifically, the pre-lithiation dosage of the electrode for a lithium secondary battery according to an exemplary embodiment of the present specification may be 0.7 mAh/cm$^2$ or more, and the charge/discharge efficiency may be 93% or more.

In this case, the pre-lithiation dosage may be determined from the difference in charge (lithiation) capacity between a half-cell manufactured using an electrode for a lithium secondary battery according to an exemplary embodiment of the present specification and a half-cell using an electrode manufactured under the same conditions except that pre-lithiation is not applied.

The half-cell may be manufactured by using the electrode for a lithium secondary battery prepared as described above as a working electrode, using a 100 $\mu$m-thick lithium metal thin film cut into a circular shape of 1.7671 cm$^2$ as a counter electrode, interposing a polyethylene separator between the working electrode and the counter electrode to prepare an electrode assembly, accommodating the electrode assembly in a coin-type case, and injecting a prepared electrolyte solution. In this case, the electrolyte solution used was prepared by adding 10 wt% of FEC (fluoroethylene carbonate), based on 100 wt% of the total electrolyte solution, to a mixed organic solvent of EC (ethylene carbonate)/EMC (ethyl methyl carbonate)/DEC (diethyl carbonate) (= 20/70/10 (Vol%)), and adding LiPF$_6$ as a lithium salt at a concentration of 1.0 M.

In addition, the charge/discharge efficiency of the electrode for the lithium secondary battery can be determined by the following formula E. In this case, the charge (lithiation) capacity is measured at a rate of 0.1C under CCCV conditions with a lower-limit voltage of 5 mV and a cut-off current of 0.005C, and the discharge (de-lithiation) capacity is measured at a rate of 0.1C under CC conditions with an upper-limit voltage of 1.5 V. The charge and discharge capacities obtained through this may be substituted into Formula E below to calculate the charge/discharge efficiency.

Charge/discharge efficiency (%) = {(discharge capacity (mAh/cm$^2$))/(charge capacity (mAh/cm$^2$))} x 100%　　　　　[Formula E]

A lithium secondary battery according to an exemplary embodiment of the present specification may include the electrode for a lithium secondary battery described above; a separator; and an electrolyte solution. The lithium secondary battery includes the electrode for a lithium secondary battery described above, thereby preventing lithium plating caused by residual lithium on the electrode surface, enabling normal operation and ensuring excellent life performance and voltage stability.

In an exemplary embodiment of the present specification, the separator serves to separate the negative electrode and the positive electrode and to provide a transport path for lithium ions, in which any separator may be used as the separator without particular limitation as long as it is typically used in a secondary battery, and particularly, a separator having high moisture-retention ability for an electrolyte solution as well as a low resistance to the ion transport of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In an exemplary embodiment of the present specification, the electrolyte solution may include, but is not limited to, an organic liquid electrolyte solution, an inorganic liquid electrolyte solution, a solid polymer electrolyte solution, a gel-type polymer electrolyte solution, a solid inorganic electrolyte solution, and a molten inorganic electrolyte solution, which can be used in the manufacture of a lithium secondary battery.

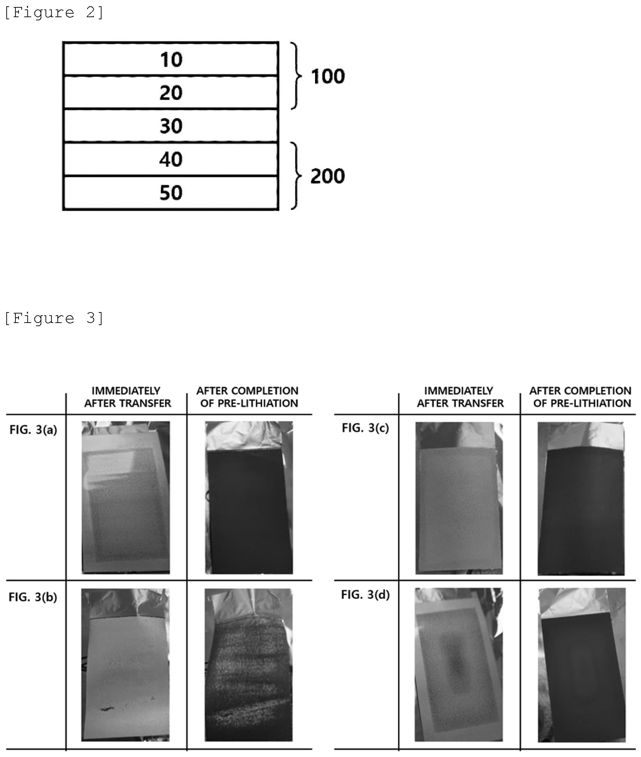

FIG. 2 is a view showing a laminated structure of a lithium secondary battery according to an exemplary embodiment of the present specification. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween. In this case, the electrode for a lithium secondary battery according to an exemplary embodiment of the present specification may be the negative electrode 100 for a lithium secondary battery or the positive electrode 200 for a lithium secondary battery, and specifically, may be the negative electrode 100 for a lithium secondary battery.

According to another exemplary embodiment of the present specification, a battery module including the lithium secondary battery as a unit cell, a battery pack including the same, and a battery pack including the lithium secondary battery may be provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Best Mode]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

<u>**<Preparation Example>**</u>

<u>**Example 1**</u>

<u>**<Preparation of Electrode>**</u>

A negative electrode slurry was prepared by including 16 kg (96.28 parts by weight) of Si and graphite in a ratio of 15:85 as negative electrode active materials, 0.4 kg (2.4 parts by weight) of SBR (styrene butadiene rubber) and 0.2 kg (1.2 parts by weight) of CMC (carboxymethyl cellulose) as binders, and further including a CNT predispersion (0.12 parts by weight) containing 0.01 kg of a dispersant and 0.01 kg of single-walled CNTs.

The negative electrode slurry was coated on a copper foil (15 $\mu$m thick) to have a capacity of 4.3 mAh/cm$^2$ per unit area and then dried to prepare a negative electrode active material layer.

A transfer stack was prepared by bringing a lithium metal layer into contact with one surface of a polyethylene terephthalate (PET) base layer, and performing press-rolling several times at room temperature by a roll-to-roll method under a pressure of 100 kgf/cm$^2$ or more until the lithium metal layer had a thickness of 5 $\mu$m.

In a dry room, the transfer stack was brought into contact such that the lithium metal layer came into contact with an upper portion of the negative electrode active material layer, and pressed at a pressure of 4.2 kgf/cm$^2$. Aging was subsequently performed at 25°C without peeling off the base layer until pre-lithiation was completed, thereby preparing a pre-lithiated negative electrode having a capacity of 0.838 mAh/cm$^2$.

In this case, whether the pre-lithiation was completed was checked by observing that the color of the surface of the negative electrode, which was silver, had completely changed to black due to the transfer of the lithium metal layer.

**<Preparation of Half-cell>**

An electrode assembly was prepared by using the negative electrode prepared as described above as a working electrode, using a 100 μm-thick lithium metal thin film cut into a circular shape of 1.7671 cm$^2$ as a counter electrode, and interposing a polyethylene separator between the working electrode and the counter electrode.

In addition, an electrolyte solution was prepared by adding 10 wt% of FEC (fluoroethylene carbonate), based on 100 wt% of the total electrolyte solution, to a mixed organic solvent of EC (ethylene carbonate)/EMC (ethyl methyl carbonate)/DEC (diethyl carbonate) (= 20/70/10 (Vol%)), and adding LiPF$_6$ as a lithium salt at a concentration of 1.0 M.

The electrode assembly was built into a coin-type case, and the prepared electrolyte solution was injected to prepare a coin-type half-cell lithium secondary battery.

**Comparative Example 1**

An electrode for a lithium secondary battery and a half-cell of Comparative Example 1 were prepared in the same manner as in Example 1, except that the base layer was peeled off (i.e., aging was performed with the base layer peeled off) immediately after the transfer stack was brought into contact such that the lithium metal layer came into contact with the upper portion of the negative electrode active material layer and pressed at a pressure of 4.2 kgf/cm$^2$.

**Comparative Example 2**

An electrode for a lithium secondary battery and a half-cell of Comparative Example 2 were prepared in the same manner (i.e., aging was performed with the base layer peeled off) as in Comparative Example 1, except that the transfer stack was brought into contact such that the lithium metal layer came into contact with the upper portion of the negative electrode active material layer and pressed at a pressure of 6.7 kgf/cm$^2$.

**Comparative Example 3**

An electrode for a lithium secondary battery and a half-cell of Comparative Example 3 were prepared in the same manner (i.e., aging was performed without peeling off the base layer) as in Example 1, except that the transfer stack was brought into contact such that the lithium metal layer came into contact with the upper portion of the negative electrode active material layer and pressed at a pressure of 6.7 kgf/cm$^2$.

**Comparative Example 4**

An electrode for a lithium secondary battery and a half-cell of Comparative Example 4 were prepared in the same manner as in Example 1, except that the transfer stack was not brought into contact (i.e., pre-lithiation was not performed).

In the preparation of the electrodes for lithium secondary batteries of Example 1 and Comparative Examples 1 to 3, the pressure applied in the pressing step after contacting the transfer stack and the presence or absence of base layer removal in the aging step ('O' indicates aging with the base layer peeled off, and 'X' indicates aging without peeling off the base layer) are summarized in Table 1 below. Comparative Example 4 was marked with '-' because pre-lithiation through contact with the transfer stack was not performed.

[Table 1]

|  | Pressure (kgf/cm$^2$) | Removal of base layer |
|---|---|---|
| Example 1 | 4.2 | X |
| Comparative Example 1 | 4.2 | O |
| Comparative Example 2 | 6.7 | O |
| Comparative Example 3 | 6.7 | X |
| Comparative Example 4 | - | - |

**Experimental Example 1: Evaluation of Residual Lithium and By-product Layer Formation on the Electrode Surface**

For the lithium secondary battery electrodes of Example 1 and Comparative Examples 1 to 3, the electrode surface immediately after contacting and pressing the transfer stack and the electrode surface after completion of pre-lithiation were photographed (imaging device: digital camera) and are shown in FIG. 3.

Even when the electrode of Example 1 was pressed at a low pressure of 6 kgf/cm$^2$ or less, aging was performed without peeling off the base layer, which promoted a chemical reaction between the electrode active material layer and the lithium metal layer. As a result, it was confirmed from FIG. 3(a) that no residual lithium was generated on the electrode surface after completion of pre-lithiation. Additionally, because the pressing was performed at a low pressure, the amount of heat generated by the pre-lithiation reaction was small, and it was confirmed that pre-lithiation was completed cleanly without formation of a by-product layer.

However, in the electrode of Comparative Example 1, where aging was performed with the base layer peeled off immediately after pressing was performed at a low pressure of 6 kgf/cm$^2$ or less, the surface of the lithium metal layer of the transfer stack formed by press-rolling was not uniform. As a result, regions where the electrode active material layer and the lithium metal layer were not in proper contact occurred, and it was confirmed from FIG. 3(b) that a considerable amount of residual lithium was generated on the electrode surface.

In the electrode of Comparative Example 3, aging was performed without peeling off the base layer until pre-lithiation was completed. However, pressing at a high pressure exceeding 6 kgf/cm$^2$ caused the pre-lithiation reaction to occur actively, generating a large amount of heat, and the heat was trapped by the base layer. As a result, it was confirmed from FIG. 3(d) that a thick by-product layer was formed on the surface of the central portion of the electrode. The thick by-product layer was mainly composed of $Li_3N$, and was not decomposed during charging and discharging, causing Li loss and acting as a resistance layer that increased resistance.

In the electrode of Comparative Example 2, pressing at a high pressure exceeding 6 kgf/cm$^2$ caused the pre-lithiation reaction to occur actively, so that almost no lithium remained on the electrode surface. In addition, because aging was performed with the base layer peeled off, it was confirmed from FIG. 3(c) that a thick by-product layer was not formed on the surface of the central portion of the electrode. However, as confirmed in Experimental Example 2 below, the electrode of Comparative Example 2 exhibited a problem of rapid increase in the initial temperature.

**Experimental Example 2: Evaluation of Initial Temperature of Electrode Surface**

To confirm whether the initial temperature increases due to reaction heat caused by the reaction of the lithium metal layer with air in the dry room and heat generated by pre-lithiation when aging was performed with the base layer peeled off, the initial peak temperatures of the electrodes of Comparative Examples 1 and 2 aged with the base layer peeled off were measured and are shown in Table 2 below.

The initial peak temperature of the electrode was measured by fixing a k-type thermocouple to the electrode surface in contact with the lithium metal layer immediately after removal of the base layer.

[Table 2]

| | Pressure (kgf/cm$^2$) | Removal of base layer | Initial peak temperature (°C) |
|---|---|---|---|
| Comparative Example 1 | 4.2 | O | 24 |
| Comparative Example 2 | 6.7 | O | 30 |

Referring to Table 2, the electrode of Comparative Example 2, which was pressed at a higher pressure than that of Comparative Example 1, generated more heat as the pre-lithiation reaction was further promoted. Further, additional heat was generated by the oxidation reaction between the lithium metal layer exposed by peeling off the base layer immediately after pressing and air in the dry room, so that the initial peak temperature of the electrode was confirmed to be significantly higher than that of Comparative Example 1. That is, it can be seen that Comparative Example 2 has a higher likelihood of thermal runaway and the like compared to Example 1, Comparative Example 1, or Comparative Example 3.

**Experimental Example 3: Evaluation of Charge/Discharge Efficiency of Half-Cell**

Residual lithium generated on the electrode surface during the pre-lithiation process may result from insufficient contact between the lithium metal layer and the electrode active material layer. Because the residual lithium is not easily decomposed even during operation of the battery, the degree of pre-lithiation varies, leading to differences in efficiency when measuring the half-cell capacity.

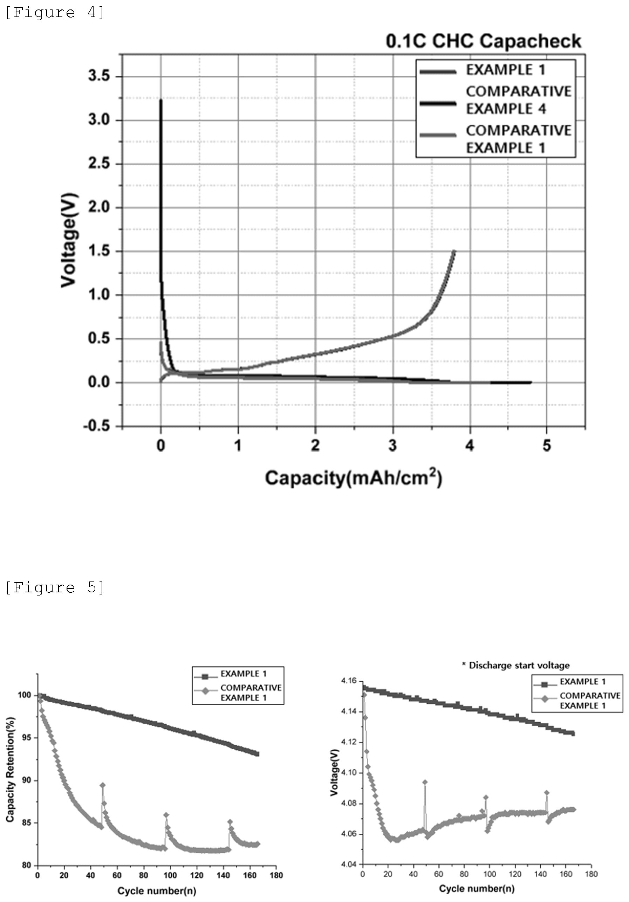

To confirm this, pre-lithiation dosage and efficiency were measured using half-cells of Example 1, in which aging was performed without peeling off the base layer, Comparative Example 1, which was identical to Example 1 in terms of all conditions except that aging was performed with the base layer peeled off, and Comparative Example 4, which was identical to Example 1 in terms of all conditions except that pre-lithiation was not performed. The results are shown in FIG. 4 and Table 3 below.

Specifically, the pre-lithiation dosage can be obtained from the difference in charge (lithiation) capacity between the half-cell of Comparative Example 4, in which pre-lithiation was not applied, and the half-cell of Example 1, and the charge/discharge efficiency can be determined according to Formula E below. In this case, the charge (lithiation) capacity was measured at a rate of 0.1C under CCCV conditions with a lower-limit voltage of 5 mV and a cut-off current of 0.005C, and the discharge (de-lithiation) capacity was measured at a rate of 0.1C under CC conditions with an upper-limit voltage of 1.5 V. The charge and discharge capacities obtained through this were substituted into Formula E below to calculate the charge/discharge efficiency.

[Formula E]Charge/discharge efficiency (%) = {(discharge capacity $(mAh/cm^2)$)/(charge capacity $(mAh/cm^2)$)} x 100%  [Formula E]

[Table 3]

|  | Charge capacity $(mAh/cm^2)$ | Discharge capacity $(mAh/cm^2)$ | Pre-lithiation dosage $(mAh/cm^2)$ | Charge/ discharge efficiency (%) |
|---|---|---|---|---|
| Example 1 | 3.919 | 3.801 | 0.838 | 96.99 |
| Comparative Example 1 | 4.100 | 3.801 | 0.657 | 92.71 |
| Comparative Example 4 | 4.757 | 3.802 | - | 79.93 |

Referring to Table 3 and FIG. 4, in the half-cell of Comparative Example 1 in which a significant amount of residual lithium was formed on the surface, the residual lithium was not easily decomposed even during operation. Accordingly, even when pre-lithiation was performed with a lithium metal layer having the same thickness (5 $\mu$m), it was confirmed that the actual pre-lithiation dosage was 0.657 $mAh/cm^2$, which was significantly lower than that of Example 1 (pre-lithiation dosage: 0.838 $mAh/cm^2$). That is, it was confirmed that the half-cell of Example 1 secured a pre-lithiation dosage about 27% higher than that of the half-cell of Comparative Example 1, and as a result, it was confirmed that the charge/discharge efficiency was 96.99%, which was significantly higher than the efficiency of Comparative Example 1 (92.71%).

**Experimental Example 4: Evaluation of Life and Voltage Drop of Half-Cell**

When a large amount of residual lithium is generated on the electrode surface, rapid life deterioration occurs during cycling due to lithium plating. In addition, self-discharge is increased due to micro-shorts caused by lithium plating.

To confirm this, life evaluation and voltage drop evaluation were performed using an electrochemical charge/-discharge tester for the half-cell of Example 1, aged without peeling off the base layer, and the half-cell of Comparative Example 1, which was identical to Example 1 in terms of all conditions except that aging was performed with the base layer peeled off. The results are shown in FIG. 5 below.

Specifically, the life evaluation was conducted by performing an in-situ cycle test at 4.2-3.1 V under 1C/0.5C conditions, the voltage drop evaluation was conducted by charging to 4.2 V at 1C, resting for 20 minutes, and then starting discharge at 0.5C, and the cell voltage at the beginning of discharge was measured for comparison.

Referring to FIG. 5, it was confirmed that the half-cell of Example 1, in which no residual lithium was formed on the surface, exhibited improved life performance and voltage stability during cycling.

In contrast, it was confirmed that in the half-cell of Comparative Example 1, a large amount of residual lithium formed on the electrode surface was plated (lithium plating) during cycling, so that even when fully charged to 4.2 V, the voltage dropped below 4.1 V during a 20-minute rest, and the life performance also rapidly deteriorated.

Therefore, the method for manufacturing an electrode for a lithium secondary battery according to an exemplary embodiment of the present specification is to pre-lithiate an electrode active material layer by direct contact with a transfer stack, which is formed by bringing a lithium metal layer into contact with one surface of a base layer and press-rolling the lithium metal layer. Since no release layer is provided, interference with heat dissipation caused by the release layer can be prevented. Furthermore, aging is performed without peeling off the base layer after applying appropriate pressure during transfer, so that the lithium metal layer and the electrode active material layer can be uniformly contacted, thereby suppressing generation of residual lithium on the electrode surface and preventing formation of a thick by-product layer on the surface of the central portion of the electrode. As a result, the manufactured electrode for a lithium secondary battery and the lithium secondary battery can secure excellent pre-lithiation dosage and charge/discharge efficiency, and can suppress lithium plating, thereby ensuring normal life performance and voltage stability.

<Explanation of Reference Numerals and Symbols>

| 10: | negative electrode current collector layer |
| 20: | negative electrode active material layer |
| 30: | separator |
| 40: | positive electrode active material layer |
| 50: | positive electrode current collector layer |
| 100: | negative electrode for lithium secondary battery |
| 200: | positive electrode for lithium secondary battery |

**Claims**

1. A method for manufacturing an electrode for a lithium secondary battery, the method comprising:

   bringing a transfer stack, in which a base layer and a lithium metal layer are in direct contact with each other, into contact with one surface of an electrode active material layer such that the electrode active material layer and the lithium metal layer face each other; and
   pressing the electrode active material layer in contact with the transfer stack under a pressure of 6 kgf/cm$^2$ or less and aging the electrode active material layer,
   wherein the transfer stack is formed by bringing the lithium metal layer into contact with one surface of the base layer and press-rolling the lithium metal layer.

2. The method of claim 1, further comprising removing the base layer from the transfer stack after the aging.

3. The method of claim 1, wherein in the aging, the transfer stack is in a state comprising the base layer until pre-lithiation of one surface of the electrode active material layer is completed.

4. The method of claim 1, wherein the transfer stack is formed by bringing the lithium metal layer into contact with one surface of the base layer and press-rolling the lithium metal layer at a pressure of 80 kgf/cm$^2$ or more.

5. The method of claim 1, wherein a thickness of the lithium metal layer after brought into contact with one surface of the base layer and roll-pressed is 0.1 $\mu$m or more and 15 $\mu$m or less.

6. The method of claim 1, wherein the electrode active material layer comprises a carbon-based active material and a silicon-based active material as negative electrode active materials, and
   the silicon-based active material comprises one or more selected from the group consisting of Si, silicon oxide, Si/C, and a Si alloy.

7. An electrode for a lithium secondary battery, comprising:

   an electrode current collector layer; and
   an electrode active material layer provided on at least one surface of the electrode current collector layer,
   wherein the electrode is manufactured by the method of any one of claims 1 to 6.

8. A lithium secondary battery comprising:

   the electrode for a lithium secondary battery of claim 7;
   a separator; and
   an electrolyte solution.

9. A battery module comprising the lithium secondary battery of claim 8.

**10.** A battery pack comprising the lithium secondary battery of claim 8.

**11.** A battery pack comprising the battery module of claim 9.

[Figure 1]

**(a)**

Start

↓

BRING TRANSFER STACK, IN WHICH BASE LAYER AND LITHIUM METAL LAYER ARE IN DIRECT CONTACT WITH EACH OTHER, INTO CONTACT WITH ONE SURFACE OF ELECTRODE ACTIVE MATERIAL LAYER SUCH THAT ELECTRODE ACTIVE MATERIAL LAYER AND LITHIUM METAL LAYER FACE EACH OTHER — S1

↓

PRESS AND AGE ELECTRODE ACTIVE MATERIAL LAYER IN CONTACT WITH TRANSFER STACK — S2

↓

End

**(b)**

Start

↓

FORM TRANSFER STACK BY BRINGING LITHIUM METAL LAYER INTO CONTACT WITH ONE SURFACE OF BASE LAYER AND PRESS-ROLLING LITHIUM METAL LAYER — S1-1

↓

BRING TRANSFER STACK INTO CONTACT WITH ONE SURFACE OF ELECTRODE ACTIVE MATERIAL LAYER SUCH THAT ELECTRODE ACTIVE MATERIAL LAYER AND LITHIUM METAL LAYER FACE EACH OTHER — S1-2

↓

PRESS ELECTRODE ACTIVE MATERIAL LAYER AND TRANSFER STACK — S2-1

↓

AGE ELECTRODE ACTIVE MATERIAL LAYER AND TRANSFER STACK — S2-2

↓

REMOVE BASE LAYER FROM TRANSFER STACK — S3

↓

End

[Figure 2]

[Figure 3]

[Figure 4]

[Figure 5]

TRANSLATION

## INTERNATIONAL SEARCH REPORT

International application No.

**PCT/KR2025/013674**

| A. | CLASSIFICATION OF SUBJECT MATTER |
|---|---|

**H01M 4/04**(2006.01)i; **H01M 4/1393**(2010.01)i; **H01M 4/38**(2006.01)i; **H01M 4/583**(2010.01)i; **H01M 4/133**(2010.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 4/04(2006.01); H01M 10/05(2010.01); H01M 10/052(2010.01); H01M 10/0525(2010.01); H01M 10/0562(2010.01); H01M 4/13(2010.01); H01M 4/134(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 이차 전지 (lithium secondary battery), 리튬 금속 (lithium metal), 전사 (transfer), 압력 (pressure), 에이징 (aging), 전리튬화 (prelithiation), 탄소 (carbon), 실리콘 (silicon)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2024-0121859 A (SOLID POWER OPERATING, INC.) 09 August 2024 (2024-08-09)<br>claims 1, 2, 4, 9; paragraphs [0003], [0022]-[0025], [0027]-[0030], [0032], [0040], [0041] | 1-11 |
| Y | KR 10-2019-0106151 A (LG CHEM, LTD.) 18 September 2019 (2019-09-18)<br>claims 1, 6, 10; paragraphs [0098], [0101]-[0104], [0147], [0152] | 1-11 |
| A | KR 10-2019-0012973 A (LG CHEM, LTD.) 11 February 2019 (2019-02-11)<br>abstract; claims 1-13 | 1-11 |
| A | KR 10-2022-0061641 A (LG ENERGY SOLUTION, LTD.) 13 May 2022 (2022-05-13)<br>abstract; claims 1-17 | 1-11 |
| A | KR 10-2007-0093854 A (MATSUSHITA ELECTRIC INDUSTRIAL CO., LTD.) 19 September 2007 (2007-09-19)<br>abstract; claims 1-7 | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2025** | **05 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/013674**

| Patent document cited in search report | | | Publication date (day/month/year) | Patent family member(s) | | | Publication date (day/month/year) |
|---|---|---|---|---|---|---|---|
| KR | 10-2024-0121859 | A | 09 August 2024 | CN | 118830098 | A | 22 October 2024 |
| | | | | EP | 4430681 | A1 | 18 September 2024 |
| | | | | JP | 2025-500896 | A | 15 January 2025 |
| | | | | US | 2023-197925 | A1 | 22 June 2023 |
| | | | | WO | 2023-114536 | A1 | 22 June 2023 |
| KR | 10-2019-0106151 | A | 18 September 2019 | KR | 10-2439829 | B1 | 01 September 2022 |
| KR | 10-2019-0012973 | A | 11 February 2019 | CN | 109792046 | A | 21 May 2019 |
| | | | | CN | 117691050 | A | 12 March 2024 |
| | | | | EP | 3503266 | A1 | 26 June 2019 |
| | | | | EP | 3503266 | A4 | 23 October 2019 |
| | | | | KR | 10-2283684 | B1 | 02 August 2021 |
| | | | | US | 11658285 | B2 | 23 May 2023 |
| | | | | US | 2019-0237750 | A1 | 01 August 2019 |
| | | | | WO | 2019-027152 | A1 | 07 February 2019 |
| KR | 10-2022-0061641 | A | 13 May 2022 | KR | 10-2886191 | B1 | 13 November 2025 |
| KR | 10-2007-0093854 | A | 19 September 2007 | CN | 100499216 | C | 10 June 2009 |
| | | | | CN | 101038962 | A | 19 September 2007 |
| | | | | JP | 2007-280926 | A | 25 October 2007 |
| | | | | KR | 10-1162794 | B1 | 05 July 2012 |
| | | | | US | 2007-0218365 | A1 | 20 September 2007 |
| | | | | US | 7754390 | B2 | 13 July 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240120032
- KR 1020250124502
- JP 2009080971 A